# EUROPÄISCHE PATENTSCHRIFT

(11) **EP 1 338 613 B1**
(45) Veröffentlichungstag und Bekanntmachung des Hinweises auf die Patenterteilung: **31.08.2011**
(21) Anmeldenummer: 03001340.3
(22) Anmeldetag: 23.01.2003
(51) Int. Cl.: C08F 290/06, C08G 63/06, C08F 293/00, C08G 63/08

(54) **Polymere Netzwerke**
Polymer networks
Réseau de polymères

(30) Priorität: 26.02.2002 DE 10208211
(43) Veröffentlichungstag der Anmeldung: 27.08.2003
(73) Patentinhaber: Helmholtz-Zentrum Geesthacht Zentrum für Material- und Küstenforschung GmbH, 21502 Geesthacht (DE)
(72) Erfinder: Lendlein, Andreas, 14167 Berlin (DE); Schmidt, Annette, 41462 Neuss (DE); Choi, Nok Young, 67063 Ludwigshafen (DE)
(74) Vertreter: Gulde Hengelhaupt Ziebig & Schneider

(56) Entgegenhaltungen:
- EP-A- 0 893 461
- WO-A-01/91822
- US-A- 4 700 704
- US-A- 5 133 739
- US-A- 6 165 202
- DATABASE CA [Online] CHEMICAL ABSTRACTS SERVICE, COLUMBUS, OHIO, US; WANG, SHENGUO ET AL: "Preparation of biodegradable polyester" retrieved from STN Database accession no. 134:340842 XP002236497 & CN 1 271 742 A (INST. OF CHEMISTRY, CHINESE ACADEMY OF SCIENCES, PEOP. REP. CHINA) 1. November 2000 (2000-11-01)

## Beschreibung

Die vorliegende Erfindung betrifft polymere Netzwerke sowie ein Herstellungsverfahren für die polymeren Netzwerke.

Polymere Netzwerke werden in einer Vielzahl von Anwendungsbereichen der Technik eingesetzt. Insbesondere in den vergangenen Jahren haben dabei polymere Netzwerke Aufmerksamkeit auf sich gezogen, die induzierbare Formveränderungen (Formgedächniseigenschaft) zeigen, die sogenannten Shape-Memory-Polymere (SMP). Solche SMP-Materialien sind beispielsweise in den Anmeldungen W099/42528 und W099/42147 beschrieben. Aufgrund der reversiblen Formänderung sind diese Materialien von hohem Interesse in einer Vielzahl von Bereichen, in denen beispielsweise eine Größenänderung erwünscht ist. Dies trifft z.B. auf medizinische Implantate zu, die möglichst erst am endgültigen Einsatzort ihre vollständige Größe erreichen sollen, so dass die Einführung dieser Implantate nur minimalinvasive chirurgische Eingriffe erfordert.

Obwohl im Stand der Technik bereits SMP-Materialien bekannt sind, zeigen diese einige Nachteile. Beispielsweise verlieren viele SMP-Materialien ihre Formgedächniseigenschaft, wenn in mehreren Zyklen die reversiblen Formänderungen bereits mehrfach abgerufen wurden. Darüber hinaus zeigen viele SMP-Materialien nicht die für einen Einsatz im medizinischen Bereich notwendige Gewebeverträglichkeit. Auch die manchmal erwünschte biologische Abbaubarkeit, die beispielsweise in manchen medizinischen Anwendungen erwünscht ist, lässt sich häufig nur schwer erreichen. Darüber zeigen bioabbaubare SMP-Materialien häufig die unerwünschte Eigenschaft, dass sich während des Abbaus nach dem Überschreiten einer gewissen Schwelle die mechanischen Eigenschaften rapide verändern, obwohl der Abbau noch nicht vollständig ist. Eine typische Erscheinung ist ein starkes Verspröden, was insbesondere im medizinischen Bereich Probleme hervorrufen kann, z.B. bei Implantaten. Schließlich lassen sich viele der bekannten SMP-Materialien nur schwer im Hinblick auf erwünschte thermische und mechanische Eigenschaften variieren.

Es ist deshalb die Aufgabe der vorliegenden Erfindung, ein SMP-Material zur Verfügung zu stellen, das die Probleme der bislang bekannten SMP-Materialien überwindet.

Diese Aufgabe wird erfindungsgemäß durch das polymere Netzwerk nach Anspruch 1 gelöst. Bevorzugte Ausführungsformen sind in den Unteransprüchen angegeben.

Darüber hinaus stellt die vorliegende Erfindung ein Zwischenprodukt zur Verfügung, das zur Herstellung des polymeren Netzwerks der Erfindung geeignet ist. Schließlich stellt die vorliegende Erfindung Herstellungsverfahren für das polymere Netzwerk und für das Zwischenprodukt zur Verfügung. Bevorzugte Ausführungsformen sind wiederum in den Unteransprüchen angegeben.

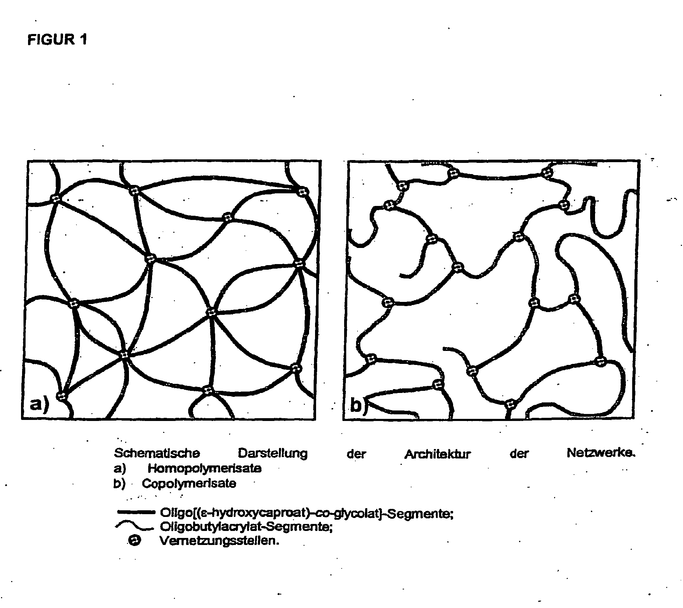

Figur 1 zeigt eine schematische Darstellung von zwei Ausführungsformen der vorliegenden Erfindung.

Das polymere Netzwerk der vorliegenden Erfindung kann aufgefasst werden als Netzwerk der Copolyestersegmente, verbunden durch nahezu punktförmige Vernetzungsstellen. Liegt ein Homonetzwerk vor (Figur 1 a)), so sind die Copolyestersegmente die einzigen Bestandteile des Netzwerks. Liegt dagegen noch eine weitere Komponente vor, bevorzugt eine Acrylatkomponente, so umfasst das Netzwerk neben den Copoyestersegmenten noch Segmente, abgeleitet von der weiteren Komponente (Figur 1 b)).

Das polymere Netzwerk der vorliegenden Erfindung umfasst als wesentliche Komponente Copolyestersegmente, umfassend Einheiten, abgeleitet von Glykolsäure (Glykolateinheiten). Diese Copolyestersegmente, umfassen bevorzugt 5 bis 70 Gew.-% Einheiten, abgeleitet von Glykolsäure. Stärker bevorzugte Bereiche sind 8 bis 50 Gew.-% und insbesondere 10 bis 30 Gew.-%. Diese Bereiche gelten insbesondere für Copolyestersegmente, die als weitere Komponente Caprolactoneinheiten umfassen. Bei bevorzugten Lactid-haltigen Copolyestersegmenten, die zu amorphen Netzwerken führen, liegt der Glykolidgehalt ebenfalls bei 5 bis 70 Gew.-%, bevorzugt 8 bis 50 Gew.-%, stärker bevorzugt 10 bis 30 Gew.-%.

Als weitere Komponente enthalten die Copolyestersegmente Einheiten, die von anderen Hydroxycarbonsäuren abgeleitet sind, insbesondere bevorzugt Einheiten, abgeleitet von ε-Caprolacton (Caprolactoneinheiten) und/oder Milchsäure (Lactideinheiten).

Die Copolyestersegmente umfassen bevorzugt Einheiten, abgeleitet von Glykolsäure, in den oben angegebenen Bereichen, sowie Einheiten, abgeleitet von ε-Caprolacton oder Milchsäure, aber keine weiteren Einheiten.

Die Copolyestersegmente der erfindungsgemäßen polymeren Netzwerke können hergestellt werden durch Copolymerisation der entsprechenden Monomerbausteine unter Einsatz eines Initiators, bevorzugt Ethylenglykol. Bevorzugt wird zur Einführung der Glykolateinheiten Diglycolid eingesetzt, das mit ε-Caprolacton copolymerisiert werden kann. Zur Einführung von Lactideinheiten wird bevorzugt LL-Dilactid eingesetzt. Bevorzugt erfolgt die Reaktion mit ε-Caprolacton in Übereinstimmung mit der Reaktion (2) wodurch das Zwischenprodukt der Formel (1) erhalten wird:

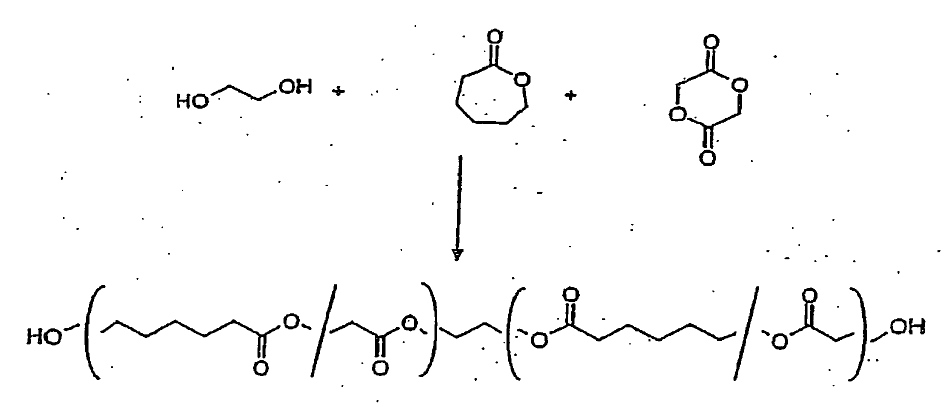

Diese Reaktion erfolgt bevorzugt in der Masse, optional unter Einsatz eines Katalysators, beispielsweise Dibutylzinn(IV)oxid. Ohne Einsatz eines Katalysators werden überwiegend blockartige Verteilungen der Comonomere erreicht, während der Einsatz eines Katalysators zu einer stärker statistischen Verteilung der Comonomere in den Copolyestem führt. Da viele der möglichen Katalysatoren, insbesondere die Zinnverbindungen toxisch sind, muss bei einem Einsatz der Copolyestersegmente in Materialien für den medizinischen Bereich der im Copolyester verbleibende Katalysatorrest entfernt werden. Die jeweiligen Verfahrensbedingungen sind dem Fachmann bekannt und durch die nachfolgenden Beispiele illustriert. Die Reaktion unter Einsatz von LL-Dilactid erfolgt analog, was das (1) entsprechende Zwischenprodukt (1a) ergibt.

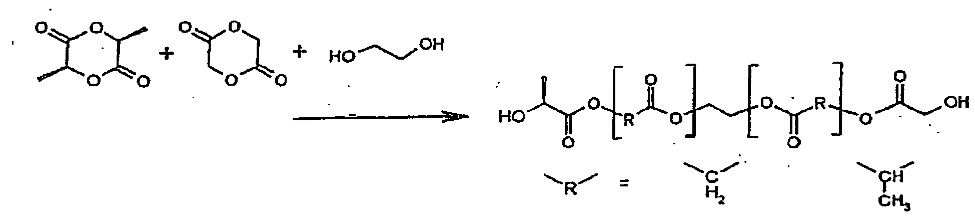

Die durch diese Reaktion hergestellten Zwischenprodukte eignen sich, nach geeigneter Funktionalisierung, beispielsweise durch das Einbringen endständiger Acrylatgruppen, bevorzugt Methacrylatgruppen, zur Herstellung des polymeren Netzwerks der vorliegenden Erfindung.

Die Copolyestersegmente, die im erfindungsgemäßen polymeren Netzwerk enthalten sind, weisen bevorzugt eine Verteilung der Caprolactoneinheiten und der Glykolateinheiten auf, die die folgenden statistischen Zahlenmittel ergeben:
Zahlenmittel der Caprolactoneinheiten (ZMCE) (durchschnittl. Anzahl miteinander verknüpfter Caprolactoneinheiten bis zur nächsten Glykolateinheit): von 2 bis 21, bevorzugt von 2 bis 8, insbesondere bevorzugt von 2,6 bis 7,5.
Zahlenmittel der Glykolateinheiten (ZMGE) (durchschnittl. Anzahl miteinander verknüpfter Glykolateinheiten bis zur nächsten Caprolactoneinheit): von 1 bis 4, bevorzugt von 1 bis 2, insbesondere bevorzugt von 1,1 bis 1,3.

Diese Verteilung lässt sich über die Verhältnisse der Monomere bei der Copolymerisation steuern.

Die Copolyestersegmente des erfindungsgemäßen polymeren Netzwerks, wenn Caprolactoneinheiten vorliegen, weisen bevorzugt ein Zahlenmittel des Molekulargewichts, bestimmt durch GPC, von 2000 bis 20000 auf, stärker bevorzugt von 4000 bis 15000, insbesondere bevorzugt von 8000 bis 12000. Liegen dagegen Lactideinheiten vor, so ist das Zahlenmittel des Molekulargewichts bevorzugt von 600 bis 20000, stärker bevorzugt von 1000 bis 17500 und insbesondere bevorzugt von 1100 bis 10000. Dieses Molekulargewicht kann bei der Copolymerisation der Ausgangsmonomere gesteuert werden, da die Länge (d.h. das Molekulargewicht) der Copolyestersegmente der Länge der vorher hergestellten Zwischenprodukte entspricht. Die dafür notwendigen Parameter sind dem Fachmann bekannt und in den folgenden Beispielen illustriert. Durch Variation des Molekulargewichts lassen sich unterschiedliche Vemetzungsdichten erzielen, wobei bei einheitlichen Copolyestersegmenten (d.h. geringe Variabilität des Molekulargewichts) einheitlichere polymere Netzwerke erhalten werden können, was für die Reproduzierbarkeit gewünschter Eigenschaften von Vorteil ist.

Die Herstellung des erfindungsgemäßen polymeren Netzwerks erfolgt bevorzugt unter Einsatz des Zwischenprodukts der Formel (1) bzw. (1a), nach geeigneter Funktionalisierung. Diese Funktionalisierung erfolgt bevorzugt durch das Einbringen von endständigen Acrylateinheiten, bevorzugt unter Einsatz von Methacryloylchlorid, z.B. in Übereinstimmung mit Reaktion (3), worin K die Hauptkette des Zwischenprodukts darstellt:

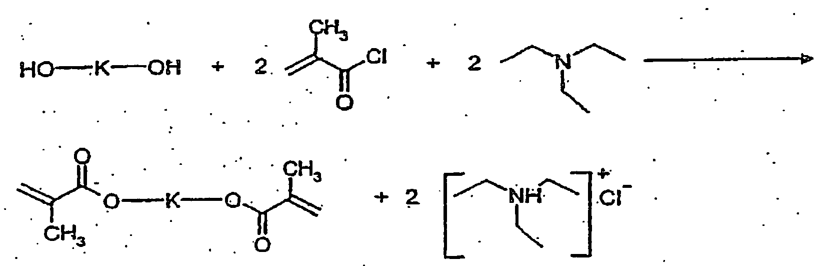

Diese Reaktion erfolgt bevorzugt in Lösung, z.B. in einer Lösung mit THF als Lösungsmittel. Die dazu notwendigen Verfahrensparameter sind dem Fachmann bekannt und in den folgenden Beispielen illustriert. Die Umsetzung von Lactid-haltigen Zwischenprodukten der Formel (1a) erfolgt analog. Durch diese Funktionalisierung werden Makromonomere, geeignet für die Herstellung der erfindungsgemäßen polymeren Netzwerke, durch die nachfolgende Vernetzung erhalten. Der Funktionalisierungsgrad, z.B. beim Einbringen von Methacrylatendgruppen der Methacrylierungsgrad, ist bevorzugt größer als 70%. Bei Methacrylierungen werden typischerweise Methacrylierungsgrade von 85 bis 99% erreicht, wobei ein Methycrylierungsgrad von 100% der vollständigen Funktionalisierung der beiden Endgruppen pro Zwischenproduktmolekül entspricht. Die so funktionalisierten Zwischenprodukte können zur Herstellung der erfindungsgemäßen polymeren Netzwerke eingesetzt werden. Dabei stört ein gewisser Anteil an nicht vollständig funktionalisierten Zwischenprodukten nicht. Die unvollständig funktionalisierten Zwischenprodukte führen bei der Vernetzung zum Auftreten von losen Kettenenden bzw. zu nicht kovalent an das polymere Netzwerk gebundenen Oligomeren. Sowohl lose Kettenenden als auch Oligomere sind nicht störend, solange deren Anteil nicht übermäßig wird. Mit Funktionalisierungsgraden im Bereich von 70 bis 100% lassen sich polymere Netzwerke in Übereinstimmung mit der vorliegenden Erfindung herstellen.

Die Vernetzung der Makromonomere nach der Funktionalisierung erfolgt bevorzugt durch UV-Bestrahlung, wodurch die reaktiven, funktionalisierten Endgruppen miteinander reagieren. Da die Makromonomere als tetrafunktional angesehen werden können, kann eine Vernetzung erfolgen, was die polymeren Netzwerke der Erfindung ergibt, umfassend die Copolyestersegmente. Somit entsteht ein kovalent vernetztes dreidimensionales Netzwerk mit den oben genannten punktförmigen Vemetzungsstellen.

Wird die Vernetzungsreaktion, die bevorzugt in der Schmelze der Makromonomere stattfindet, nur mit den Makromonomeren durchgeführt, so entstehen die in Figur 1 a) schematisch dargestellten Homonetzwerke. In einer bevorzugten Ausführungsform kann die Vernetzungsreaktion in Gegenwart eines zusätzlichen, copolymerisierbaren Monomeren erfolgen. Dieser Einsatz von weiteren copolymerisierbaren Monomeren führt zur Erzeugung von Segmenten aus diesem weiteren Monomer, die im entstehenden Netzwerk kovalent mit eingebunden sind. Das dabei entstehende Netzwerk ist schematisch in Figur 1 b) gezeigt.

Neben den Copolyestersegmenten sind die Segmente aus dem zusätzlichen copolymerisierbaren Monomer gezeigt. Solche Netzwerke können als AB-Netzwerke bezeichnet werden, umfassend Segmente A aus dem weiteren Polymer und Segmente B, die den Copolyestersegmenten entsprechen.

Das weitere Monomer wird bevorzugt unter Acrylatmonomeren ausgesucht, bevorzugt sind Ethylacrylat, n-Butylacrylat und Hexylacrylat, insbesondere n-Butylacrylat.

Das weitere Monomer kann in einer Menge von 5 bis 70 Gew.-%, bezogen auf das Gesamtnetzwerk vorliegen, bevorzugt in einer Menge von 15 bis 60 Gew.-%. Der Einbau von variierenden Mengen des weiteren Monomeren erfolgt durch Zugabe entsprechender Mengen an Monomer zur zu vernetzenden Mischung. Der Einbau des weiteren Monomeren in das erfindungsgemäße Netzwerk erfolgt in einer Menge, die der in der Vernetzungsmischung enthaltenen Menge entspricht. Spezielle Parameter der Verfahrensführung sind durch die folgenden Beispiele illustriert.

Die erfindungsgemäßen polymeren Netzwerke weisen die folgenden Vorteile auf, die vor dem Hintergrund der Erkenntnisse im Stand der Technik überraschend sind:

Die polymeren Netzwerke der vorliegenden Erfindung zeigen gute SMP-Eigenschaften, die im Hinblick auf die bereits bekannten SMP-Materialien verbessert sind. So zeigen die erfindungsgemäßen polymeren Netzwerke eine deutlich gesteigerte Beibehaltung der SMP-Eigenschaften, selbst nach mehrfachem Auslösen des Formgedächtniseffekts. Die sogenannte Shape-Recovery bzw. die Shape-Fixity, die bei bekannten Netzwerken aus Caprolacton bis auf Werte von 85 bis 90% absinken kann, beträgt bei den erfindungsgemäßen polymeren Netzwerken, insbesondere den Netzwerken mit Caprolactoneinheiten, durchweg 97 bis 99%. Mit den Lactid-haltigen polymeren Netzwerken werden Werte von 85 bis 99,7% für Shape-Recovery und von bis zu 99,5% für Shape-Fixity erhalten. Somit verlieren die erfindungsgemäßen polymeren Netzwerke ihre SMP-Eigenschaften nicht so stark wie die Materialien aus dem Stand der Technik.

Gleichzeitig ist durch die Variation der Menge der Gykolateinheiten eine Steuerung der Temperatur möglich, die als sogenannte Schalttemperatur bezeichnet wird, d.h. die Temperatur, bei der die polymeren Netzwerke der vorliegenden Erfindung eine Formänderung zeigen. Bei den Netzwerken auf Basis von Glykolsäure und Caprolacton kann beispielsweise die Schalttemperatur dadurch auf Werte im Bereich von 20 bis 50°C eingestellt werden, in Anhängigkeit von der Menge an Glykolateinheiten und der Menge an zusätzlichem Monomeren, copolymerisiert während der Vernetzungsreaktion der Makromonomere. Diese Schalttemperaturen liegen darüber hinaus vorteilhafter Weise in einem Bereich, der ihren Einsatz im medizinischen Bereich ermöglicht, wo Schalttemperaturen im Bereich der Körpertemperatur wünschenswert sind.

Durch den Einsatz von nicht-toxischen und biologisch abbaubaren Grundbausteinen (Caprolacton, Milchsäure und Glykolsäure) wird darüber hinaus auch eine gute Bioverträglichkeit gesichert. Der optionale Einsatz weiterer Monomere, bevorzugt n-Butylacrylat, ermöglicht eine weitere Steuerung der mechanischen Eigenschaften und der Abbaueigenschaften der erfindungsgemäßen polymeren Netzwerke.

Durch die Variation der Mengen der einzelnen Bestandteile der Copolyestersegmente lassen sich auch die mechanischen Eigenschaften gezielt einstellen. Bei Netzwerken auf Basis von Glykolsäure und Caprolacton können beispielsweise Werte für E-Modul und Dehnung, bestimmt bei 70°C, von 0,2 bis 0,9 MPa bzw. von 120 bis 260% erreicht werden, wobei die entsprechenden Werte, bestimmt bei 25°C, 0,8 bis 46 MPa bzw. 200 bis 480% betragen. Für Netzwerke, die zusätzlich noch n-Butylacrylat umfassen (AB-Netzwerke) sind die entsprechenden Werte 0,41 bis 2,29 MPa bzw. 63 bis 142% bei 70°C und 6,4 bis 11 MPa bzw. 271 bis 422% bei 25°C. Lactid-haltige Netzwerke zeigen, unter anderem abhängig vom Molekulargewicht der Copolyestersegmente Werte für E-Modul und Bruchdehnung von 3 bis 11 bzw. 50 bis 200%.

Durch die Wahl des zweiten Bestandteils des Copolyestersegments lassen sich ebenfalls die mechanischen Eigenschaften steuern. Während beim Einsatz von Caprolactoneinheiten üblicherweise teilkristalline Materialien entstehen, bei denen der Übergang zwischen den verschiedenen Formen thermodynamisch bestimmt ist, kann beim Einsatz von Lactideinheiten ein Material erhalten werden, bei dem der Übergang kinetisch bestimmt ist. Somit kann der Übergang von temporärer zur pemanenten Form im Prinzip als unendlich langsamer Vorgang ausgestaltet werden. Darüber hinaus sind die polymeren Netzwerke mit Lactideinheiten sowohl oberhalb als auch unterhalb der Übergangstemperatur transparent, was bei bestimmten Anwendungen von Vorteil ist.

Die variabel einstellbare Länge der Copolyestersegmente erlaubt weiterhin die Herstellung von polymeren Netzwerken mit unterschiedlicher Vernetzungsdichte. Über die Vernetzungsdichte lässt sich, unter Beibehaltung der Glasübergangstemperatur, die Festigkeit der polymeren Netzwerke steuern.

Somit stellen die polymeren Netzwerke der vorliegenden Erfindung eine Art Baukastensystem zur Verfügung, in dem bei Einsatz einfacher Ausgangsmaterialien und unter Verwendung einfacher Reaktionen gezielt molekulare Architekturen mit einem gewünschten Eigenschaftsprofil hergestellt werden können. Die Copolyestersegmente mit Glykolateinheiten dienen dabei als Schaltsegmente für die Formgedächtniseigenschaften.

Aufgrund der oben geschilderten Eigenschaften eignen sich die erfindungsgemäßen polymeren Netzwerke insbesondere zur Anwendung im medizinischen Bereich, für Implantate, als temporäre Bänderaugmentation, zur Herstellung von sustained-release-Formulierungen aber auch als Bandscheibenersatz.

Die vorliegende Erfindung wird weiter durch die folgenden Beispiele beschrieben, die lediglich zur Illustration dienen.

### Beispiele

### Herstellung der Zwischenprodukte (Makrodiole)

Copolyester aus Diglycolid und ε-Caprolacton wurden durch ringöffnende Polymerisation in der Masse aus den Monomeren hergestellt. Als Initiator wurde Ethylenglykol eingesetzt. In einigen Ansätzen ((05), (09), (11a), (13a), (18)) wurde Dibutylzinn(IV)oxid als Katalysator eingesetzt. Die Ausgangsmonomere wurden vor der Polymerisation durch übliche Verfahren gereinigt. Die folgende Tabelle zeigt die wesentlichen Eigenschaften der hergestellten Zwischenprodukte. Tₘ₁ und Tₘ₂ wurden durch DSC Messungen bestimmt und stellen die lokalen Maxima im DSC-Diagramm dar.

| Beispiel | Gew.-% Glykolat | Zahlenmittel Molekulargewicht | ZMCE | ZMGE | Tₘ₁ °C | Tₘ₂ °C |
|---|---|---|---|---|---|---|
| (10) | 10 | 7600 | 21 | 3,1 | 47 | 51 |
| (11) | 11 | 8300 | 11 | 3,2 | 48 | 53 |
| (13) | 13 | 9300 | 9,2 | 3 | 46 | 51 |
| (16) | 16 | 9700 | 8,3 | 3,6 | 50 | |
| (05) | 5 | | 7,5 | 1,1 | 44 | |
| (09) | 9 | | 5,9 | 1,1 | 39 | 43 |
| (11a) | 11 | 11000 | 4,5 | 1,1 | 37 | 42 |
| (13a) | 13 | 10600 | 3,3 | 1,2 | 28 | 37 |
| (18) | 18 | 11200 | 2,6 | 1,3 | 16 | 28 |

Die Gegenwart zweier benachbarter Maxima im DSC-Diagramm weist auf die Anwesenheit von Kristalliten mit verschiedener thermodynamischer Stabilität hin.

Einige der oben genannten Zwischenprodukte wurden durch Umsetzung mit Methacryloylchlorid unter basischer Katalyse mit Triethylamin in THF bei 25°C und Reaktionszeiten von bis zu drei Tagen metharylisiert. Der Methacrylisierungsgrad betrug für die eingesetzten Zwischenprodukte ((05), (09), (11a), (13a), (18)) 86 bis 96%.

Diese Makromonomere wurden dann durch UV-Strahlung von 308nm bei 70°C vernetzt. Die wesentlichen Daten der polymeren Netzwerke sind in der folgenden Tabelle dargestellt. Die mechanischen Werte wurden durch Zug-Dehnungs-Versuche ermittelt. T_{g} und Tₘ benennen die Glasübergangstemperatur und die Schmelztemperatur, Tₜᵣₐₙₛ die Formgedächtnis-Übergangstemperatur, E den Elastizitätsmodul und R_{r,ges} das Gesamtrückstellungsverhältnis nach fünf Zyklen. R_{r,ges} wurde bestimmt in Übereinstimmung mit den dafür publizierten Messverfahren für Formgedächtnis-Eigenschaften unter Verwendung von Zug-Dehnungs-apparaturen.

| Beispiel | T_{g} °C | Tₘ °C | EMPa | R_{r,ges} % | Tₜᵣₐₙₛ °C |
|---|---|---|---|---|---|
| (05) | -59 | 46 | 0,97 | 99 | 43 |
| (09) | -55 | 39 | 0,90 | 99 | 37 |
| (11a) | -56 | 37 | 0,24 | 99 | 36 |
| (13a) | -52 | 30 | 0,34 | 99 | 27 |
| (18) | -52 | 20 | 0,45 | 99 | |

Die Makromonomere der Versuche (09) und (11a) wurden in der Gegenwart von n-Butylacrylat vernetzt, unter ansonsten identischen Reaktionsbedingungen. Die folgende Tabelle zeigt die wesentlichen Daten der erhaltenen polymeren Netzwerke.

| Beispiel | Gew.-% Butylacrylat im Netzwerk Bestimmt durch ¹³C-NMR | EMPA | Bruchdehnung % |
|---|---|---|---|
| (09)B17 | 17 | 11 | 271 |
| (09)B28 | 28 | 8,1 | 422 |
| (09)B41 | 41 | 6,4 | 400 |
| (09)B56 | 56 | 6,5 | 399 |
| (11a)B18 | 18 | 8,8 | 372 |

Die erfindungsgemäßen Beispiel zeigen, dass durch einfache Variation der molekularen Bausteine der polymeren Netzwerke erwünschte Eigenschatsprofile hergestellt werden können.

## Patentansprüche

1. Polymeres, kovalent vernetztes Netzwerk, umfassen Copolyestersegmente, wobei die Copolyestersegmente Einheiten enthalten, abgeleitet von Glykolsäure.

2. Polymeres Netzwerk nach Anspruch 1, wobei die Copolyestersegmente zusätzlich Einheiten enthalten, abgeleitet von Caprolacton.

3. Polymeres Netzwerk nach Anspruch 1, wobei die Copolyestersegmente zusätzlich Einheiten enthalten, abgeleitet von Milchsäure.

4. Polymeres Netzwerk nach einem der Ansprüche 1 bis 3, weiter umfassend Einheiten, abgeleitet von Acrylat.

5. Polymeres Netzwerk nach Anspruch 4, wobei das Acrylat n-Butylacrylat ist.

6. Polymeres Netzwerk nach einem der Ansprüche 4 oder 5, umfassend von 5 bis 70 Gew.-% Einheiten, abgeleitet von Acrylat.

7. Polymeres Netzwerk nach einem der vorstehenden Ansprüche, wobei die Copolyestersegmente 8 bis 50 Gew.-% Einheiten enthalten, abgeleitet von Glykolsäure.

8. Polymeres Netzwerk nach einem der vorstehenden Ansprüche, wobei die Copolyestersegmente ein Zahlenmittel des Molekulargewichts von 5.000 bis 20.000 aufweisen.

9. Polymeres Netzwerk nach einem der vorstehenden Ansprüchen, wobei das Zahlenmittel der Sequenzen, abgeleitet von Caprolacton, 2 bis 21 und/oder das Zahlenmittel der Sequenzen, abgeleitet von Glykolsäure, 1 bis 4 beträgt.

10. Verfahren zur Herstellung eines polymeren Netzwerks nach einem der Ansprüche 1 bis 9, umfassend die Dimethacrylisierung eines Zwischenprodukts der Formel (1): 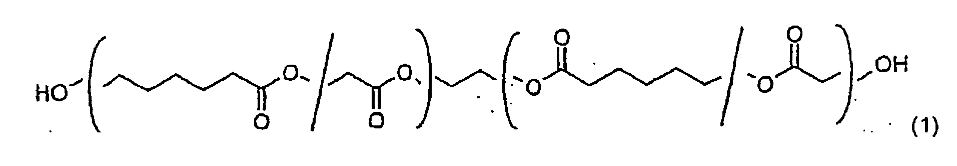 und anschießende Vernetzung der Dimethacrylat-funktionalisierten Verbindungen, gegebenenfalls unter Zusatz eines Acrylatmonomeren.

11. Verfahren nach Anspruch 10, wobei das gegebenenfalls zugesetzte Acrylatmonomer n-Butylacrylat ist.

12. Verfahren nach Anspruch 10 oder 11, wobei die Vernetzung durch UV-Bestrahlung initiiert wird.

13. Verfahren nach einem der Ansprüche 10 bis 12, wobei die Vernetzung in Schmelze erfolgt.

## Claims

1. A polymeric, covalently crosslinked network comprising copolyester segments, said copolyester segments containing units derived from glycolic acid.

2. The polymeric network as claimed in claim 1, said copolyester segments additionally containing units derived from caprolactone.

3. The polymeric network as claimed in claim 1, said copolyester segments additionally containing units derived from lactic acid.

4. The polymeric network as claimed in any of claims 1 to 3, further comprising units derived from acrylate.

5. The polymeric network as claimed in claim 4, wherein the acrylate is n-butyl acrylate.

6. The polymeric network as claimed in any of claims 4 or 5, comprising from 5 to 70 wt.% units derived from acrylate.

7. The polymeric network as claimed in any of the preceding claims, said copolyester segments containing 8 to 50 wt.% units derived from glycolic acid.

8. The polymeric network as claimed in any of the preceding claims, said copolyester segments having a number average molecular weight of from 5,000 to 20,000.

9. The polymeric network as claimed in any of the preceding claims, wherein the number average of sequences derived from caprolactone is 2 to 21 and/or the number average of sequences derived from glycolic acid is 1 to 4.

10. A method for producing a polymeric network as claimed in any of claims 1 to 9, said method comprising dimethacrylation of an intermediate of formula (1) 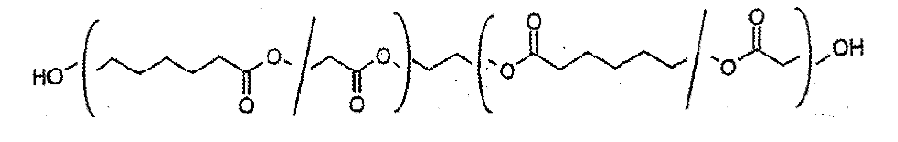 and subsequent crosslinking of the dimethacrylate-functionalized compounds, optionally with addition of an acrylate monomer.

11. The method as claimed in claim 10, wherein the optionally added acrylic monomer is n-butyl acrylate.

12. The method as claimed in claim 10 or 11, wherein crosslinking is initiated by UV irradiation.

13. The method as claimed in any of claims 10 to 12, wherein crosslinking takes place in a melt.

## Revendications

1. Réseau polymère réticulé de façon covalente, comprenant des segments de copolyester, dans lequel les segments de copolyester contiennent des motifs dérivant d'acide glycolique.

2. Réseau polymère selon la revendication 1, dans lequel les segments de copolyester contiennent en plus des motifs dérivant de caprolactone.

3. Réseau polymère selon la revendication 1, dans lequel les segments de copolyester contiennent en plus des motifs dérivant d'acide lactique.

4. Réseau polymère selon l'une quelconque des revendications 1 à 3, comprenant en plus des motifs dérivant d'acrylate.

5. Réseau polymère selon la revendication 4, dans lequel l'acrylate est du n-butylacrylate.

6. Réseau polymère selon l'une des revendications 4 ou 5, comprenant 5 à 70 % en poids de motifs dérivant d'acrylate.

7. Réseau polymère selon l'une quelconque des revendications précédentes, dans lequel les segments de copolyester contiennent 8 à 50 % en poids de motifs dérivant d'acide glycolique.

8. Réseau polymère selon l'une quelconque des revendications précédentes, dans lequel les segments de copolyester ont une masse moléculaire moyenne en nombre de 5.000 à 20.000.

9. Réseau polymère selon l'une quelconque des revendications précédentes, dans lequel la moyenne en nombre des séquences dérivant de caprolactone est de 2 à 21 et/ou la moyenne en nombre des séquences dérivant d'acide glycolique est de 1 à 4.

10. Procédé de fabrication d'un réseau polymère selon l'une quelconque des revendications 1 à 9, comprenant la diméthacrylation d'un produit intermédiaire de formule (1) 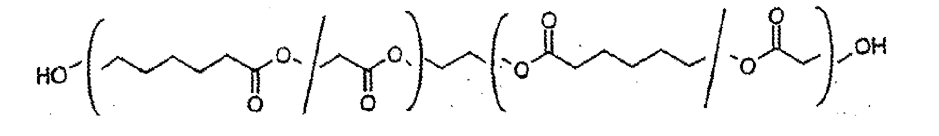 et une réticulation suivante des composés à fonction diméthacrylate, éventuellement en ajoutant un monomère acrylate.

11. Procédé selon la revendication 10, dans lequel le monomère acryl éventuellement ajouté est du n-butylacrylate.

12. Procédé selon la revendication 10 ou 11, dans lequel la réticulation est amorcée par irradiation UV.

13. Procédé selon l'une quelconque des revendications 10 à 12, dans lequel la réticulation s'effectue dans la masse fondue.
